# EUROPEAN PATENT APPLICATION

(11) **EP 3 062 139 A1**
(43) Date of publication of application: **31.08.2016**
(21) Application number: 16157305.0
(22) Date of filing: 25.02.2016
(51) Int. Cl.: G02B 26/10, G02B 27/42, G02B 27/01

(54) **IMAGE DISPLAY DEVICE**

(30) Priority: 27.02.2015 JP 2015038584
(71) Applicant: Seiko Epson Corporation, Tokyo 163 (JP)
(72) Inventor: ISHIDA, Daisuke, Nagano 392-8502 (JP)
(74) Representative: Hoffmann Eitle

(57) **Abstract**

An image display device mounted on a head of an observer for use includes: a video light generation unit that generates video light modulated based on a video signal; a light scanner that is located on a lateral side of the head of the observer, performs main scanning on the video light in a first direction, and performs sub-scanning on the video light in a second direction orthogonal to the first direction; and a diffraction optical element on which the video light scanned by the light scanner is incident and which diffracts the incident video light and emits the video light toward one eye of the observer, wherein for the video light at an intersection point between a center of an amplitude of the main scanning and a center of an amplitude of the sub-scanning, a normal line at the intersection point of the surface of the diffraction optical element is inclined with respect to a virtual plane including a center of the one eye of the observer, a center of the other eye of the observer, and the intersection point so that light reflected from a surface of the diffraction optical element is not incident on the other eye of the observer.

## Description

### BACKGROUND

### 1. Technical Field

The present invention relates to an image display device.

### 2. Related Art

Head-mounted displays (HMDs) are known as display devices that directly radiate lasers to retinas of pupils and cause users to view images.

Head-mounted displays generally include light-emitting devices that emit light and scanning units that changing light paths so that the emitted light scan retinas of users. Such a head-mounted display enables a user to simultaneously view both of, for example, an outside scenery and an image depicted by the scanning unit.

For example, Pamphlet of International Publication No. WO2009/041055 discloses a beam scanning type display device (head-mounted display) including a light source that outputs beams, a scanning unit that scans the beams output from the light source, and a deflection unit that deflects the beams scanned by the scanning unit in a direction oriented toward the eyes of a user. In this display device, the beams scanned by the scanning unit can be deflected toward the eyes of the user, using a hologram mirror as a deflection unit and using diffraction in the hologram.

On the other hand, part of a light amount of the beam scanned by the scanning unit is not diffracted by the hologram mirror, as described above, but is regularly reflected from the surface of the hologram mirror. There is a concern that the beam (0th-order diffracted light) reflected in this way is incident on an eye different from the eye to which the beam diffracted by the hologram mirror is oriented. For example, when a hologram mirror is designed so that a diffracted beam is oriented to the left eye of a user, there is a concern of the beam reflected from the surface of the hologram mirror being incident on the right eye.

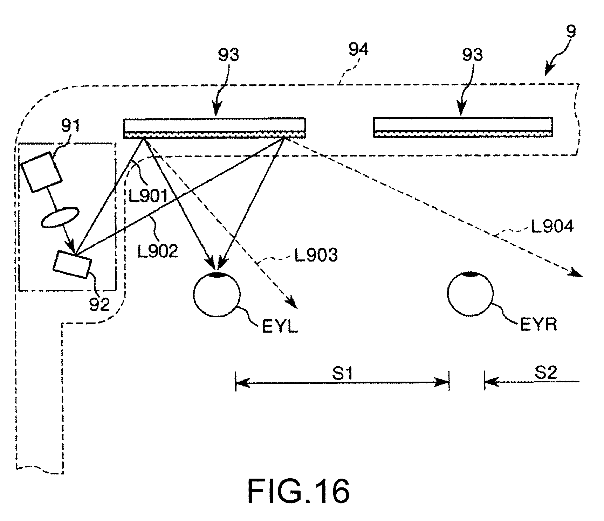

Fig. 16 is a diagram illustrating the configuration of an image display device of the related art when the image display device is mounted on the head of an observer.

An image display device 9 illustrated in Fig. 16 includes a light source 91, a scanning unit 92, a deflection unit 93 configured as hologram mirrors, and a frame 94 to which the deflection unit 93 is fixed.

In the image display device 9, a beam of video light emitted from the light source 91 arrives at the deflection unit 93 while being scanned by the scanning unit 92. In Fig. 16, for example, light traces of pieces of video light L901 and L902 are illustrated by solid-line arrows. The pieces of video light L901 and L902 arriving at the deflection unit 93 are diffracted in the deflection unit 93 and are each emitted toward the left eye EYL. Accordingly, an image formed by the pieces of video light L901 and L902 can be viewed by the left eye EYL.

On the other hand, dotted-line arrows illustrated in Fig. 16 indicate light traces of pieces of reflected light L903 and L904 occurring through reflection from the surface of the hologram mirror when parts of the pieces of the video light L901 and L902 are not diffracted in the hologram mirror of the deflection unit 93.

Specifically, in the image display device 9 illustrated in Fig. 16, the surface of the hologram mirror confronts the retina of the left eye EYL. Therefore, when part of the video light L901 is reflected from the surface of the hologram mirror, the reflected part of the light is emitted to a space S1 which is formed inside a plane including the left eye EYL and a right eye EYR and is formed between the left eye EYL and the right eye EYR. Similarly, when part of the video light L902 is reflected from the surface of the hologram mirror, the reflected part of the light is emitted to a space S2 on the further right side of the right eye EYR. In this case, there is a high probability at which the part of the video light reflected from the surface of the hologram mirror is reflected between the pieces of reflected light L903 and L904 illustrated in Fig. 16. As a result, there is a high probability at which part of the video light to be incident on the left eye EYL is incident on the right eye EYR.

Since the video light incident on the right eye in this way is incident unintentionally, visibility of an image or an outside scenery to be viewed by the right eye may deteriorate.

### SUMMARY

An advantage of some aspects of the invention is to provide an image display device in which visibility is excellent.

The advantage can be achieved by the invention described below.

An image display device according to an aspect of the invention is an image display device mounted on a head of an observer for use. The image display device includes: a video light generation unit that generates video light modulated based on a video signal; a light scanner that is located on a lateral side of the head of the observer, performs main scanning on the video light in a first direction, and performs sub-scanning on the video light in a second direction orthogonal to the first direction; and a diffraction optical element on which the video light scanned by the light scanner is incident and which diffracts the incident video light and emits the video light toward one eye of the observer. For the video light at an intersection point between a center of an amplitude of the main scanning and a center of an amplitude of the sub-scanning, a normal line at the intersection point of the surface of the diffraction optical element is inclined with respect to a virtual plane including a center of the one eye of the observer, a center of the other eye of the observer, and the intersection point so that light reflected from a surface of the diffracted optical element is not incident on the other eye of the observer.

With this configuration, even when part of the video light is reflected from the surface of the diffraction optical element, a probability of incidence of reflected light of the video light on the other eye of the observer can be sufficiently lowered. Thus, it is possible to prevent visibility of an image or an outside scenery to be viewed by the other eye from deteriorating, and thus the image display device with high visibility can be obtained.

In the image display device according to the aspect of the invention, it is preferable that a scanning surface of the light subjected to the main scanning to pass the center of the amplitude of the sub-scanning is inclined to the same side of the normal line with respect to the virtual plane.

With this configuration, the surface of the diffraction optical element is in a state close to further confronting to the light scanner. Therefore, it is possible to reduce an amount of correction of the scanning region necessary when the video light is scanned by the light scanner. As a result, it is possible to suppress deterioration in image quality caused in the correction to be smaller.

In the image display device according to the aspect of the invention, it is preferable that the normal line at the intersection point of the surface of the diffraction optical element is inclined with respect to the virtual plane so that the normal line is located closer to a head top side of the observer than the virtual plane.

With this configuration, since the reflected light is emitted in a direction distant from the virtual plane to the head top side of the observer and unintentional light is rarely incident on the other eye, it is possible to prevent deterioration in visibility of the other eye.

In the image display device according to the aspect of the invention, it is preferable that the normal line at the intersection point of the surface of the diffraction optical element is inclined with respect to the virtual plane so that the normal line is located closer to a body side of the observer than the virtual plane.

With this configuration, since the reflected light is emitted in a direction distant from the virtual plane to the body side of the observer and unintentional light is rarely incident on the other eye, it is possible to prevent the deterioration in the visibility of the other eye.

In the image display device according to the aspect of the invention, it is preferable that the first direction is parallel to a direction connecting the center of the one eye of the observer to the center of the other eye of the observer.

With this configuration, for example, it is possible to form a video surface having sides parallel to the horizontal and vertical directions. As a result, it is possible to form a video which can be easily viewed by the observer.

In the image display device according to the aspect of the invention, it is preferable that the diffraction optical element is a volume hologram element.

With this configuration, a diffraction angle or a light flux state can be easily adjusted to guide the video light in a specific wavelength band to an eye of the observer.

It is preferable that the image display device according to the aspect of the invention further includes a frame that is located on the lateral side of the head of the observer, and the light scanner is fixed to the frame.

With this configuration, the light scanner is easily integrated with the frame, and thus it is possible to achieve miniaturization of the image display device and improve the design of the image display device.

### BRIEF DESCRIPTION OF THE DRAWINGS

The invention will be described with reference to the accompanying drawings, wherein like numbers reference like elements.
Fig. 1 is a diagram illustrating a schematic configuration of a head-mounted display of a first embodiment including an image display device according to the invention.
Fig. 2 is a schematic perspective view illustrating the head-mounted display illustrated in Fig. 1.
Fig. 3 is a diagram schematically illustrating the configuration of the image display device illustrated in Fig. 1 when the image display device is mounted on an observer.
Fig. 4 is a diagram schematically illustrating the configuration of an image generation unit illustrated in Fig. 2.
Figs. 5A and 5B are diagrams illustrating examples of driving signals of a driving signal generation unit illustrated in Fig. 4.
Fig. 6 is a plan view illustrating a light scanning unit illustrated in Fig. 4.
Fig. 7 is a sectional view (a section view taken along an X1 axis) illustrating the light scanning unit illustrated in Fig. 6.
Fig. 8 is a diagram illustrating a form in which video light scanned by a light scanning unit is projected to a reflection unit and scanned two-dimensionally form.
Figs. 9A and 9B are diagrams illustrating an operation of the image display device illustrated in Fig. 3.
Figs. 10A and 10B are schematic diagrams illustrating an operation of an image display device according to a second embodiment.
Figs. 11A and 11B are schematic diagrams illustrating an operation of an image display device according to a third embodiment.
Figs. 12A and 12B are schematic diagrams illustrating an operation of an image display device according to a fourth embodiment.
Figs. 13A and 13B are schematic diagrams illustrating an operation of an image display device according to Supplement 1.
Figs. 14A and 14B are schematic diagrams illustrating an operation of an image display device according to Supplement 2.
Fig. 15 is a diagram schematically illustrating the configuration of an image display device according to a fifth embodiment of the invention.
Fig. 16 is a diagram illustrating the configuration of an image display device of the related art when the image display device is mounted on the head of an observer.

### DESCRIPTION OF EXEMPLARY EMBODIMENTS

Hereinafter, an image display device according to the invention will be described in detail according to embodiments illustrated in the accompanying drawings.

### First Embodiment

First, a first embodiment of the image display device according to the invention will be described.

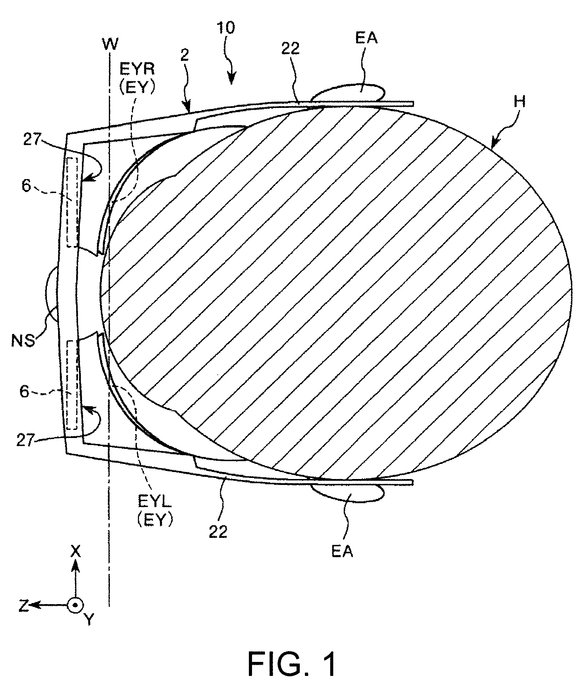

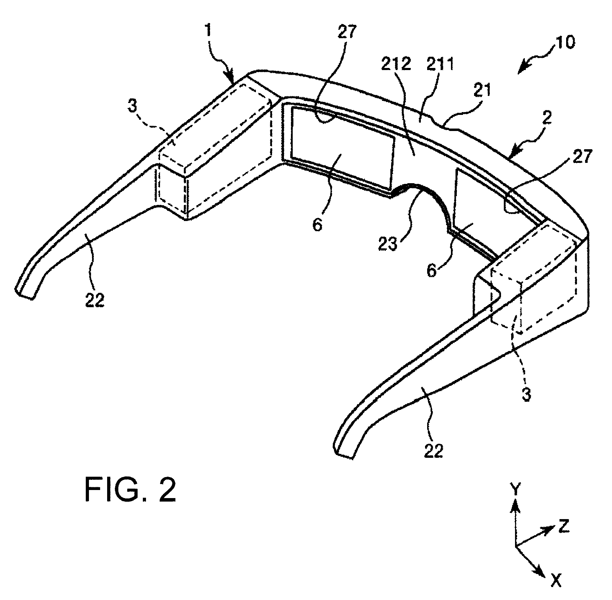

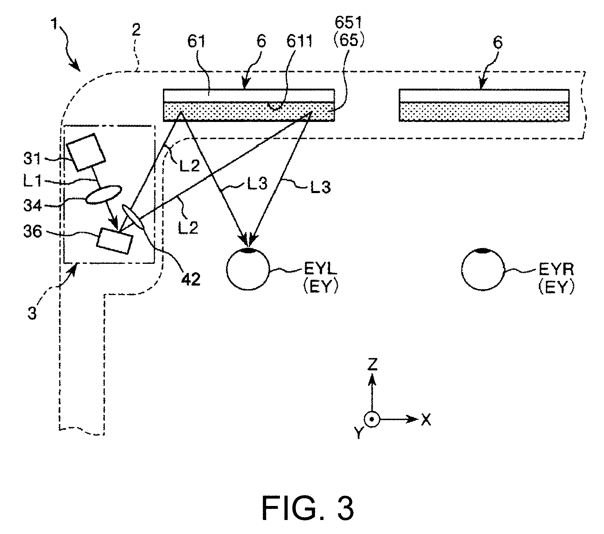

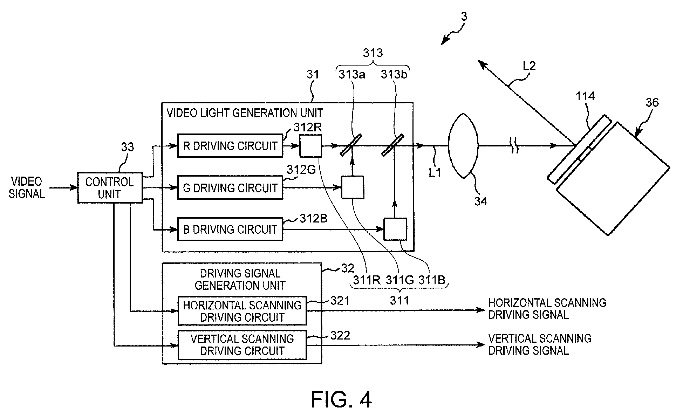

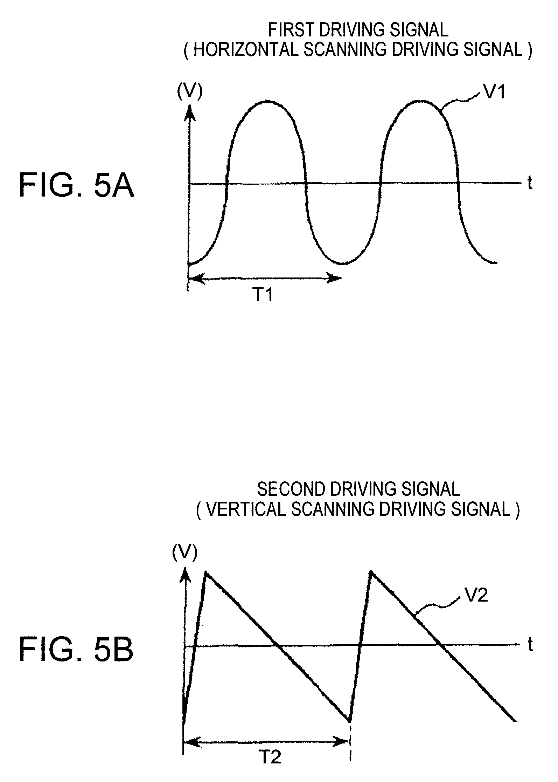

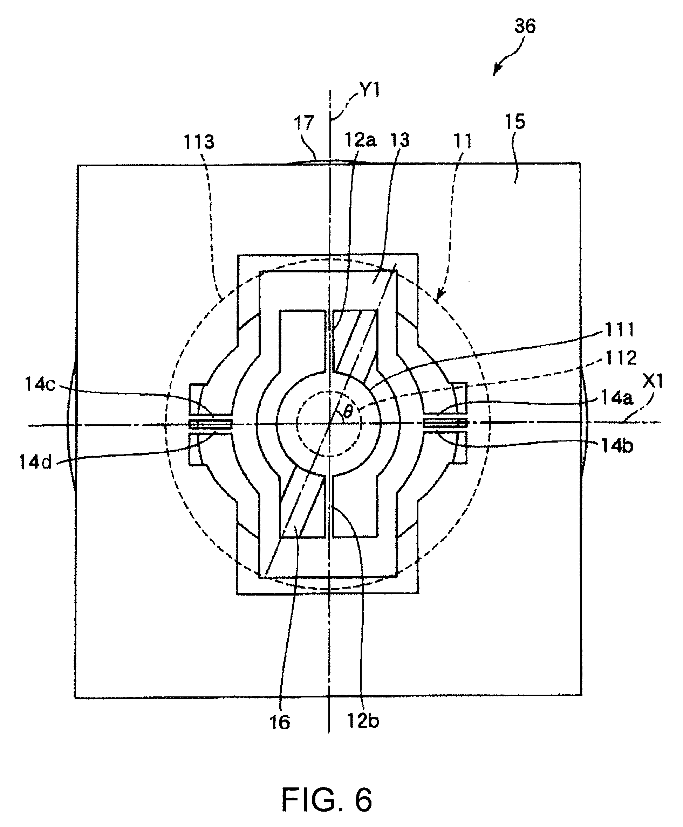

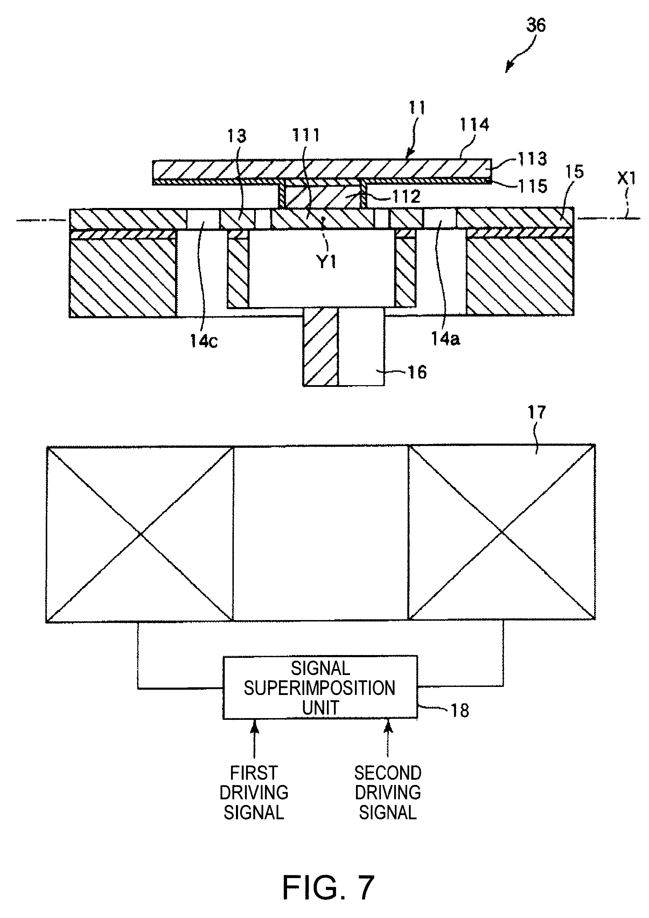

Fig. 1 is a diagram illustrating a schematic configuration of a head-mounted display of a first embodiment including an image display device according to the invention. Fig. 2 is a schematic perspective view illustrating the head-mounted display illustrated in Fig. 1. Fig. 3 is a diagram schematically illustrating the configuration of the image display device illustrated in Fig. 1 when the image display device is mounted on an observer. Fig. 4 is a diagram schematically illustrating the configuration of an image generation unit illustrated in Fig. 2. Figs. 5A and 5B are diagrams illustrating examples of driving signals of a driving signal generation unit illustrated in Fig. 4. Fig. 6 is a plan view illustrating a light scanning unit illustrated in Fig. 4. Fig. 7 is a sectional view (a section view taken along an X1 axis) illustrating the light scanning unit illustrated in Fig. 6.

In Figs. 1 to 3, to facilitate the description, the X, Y, and Z axes are illustrated by the arrows as three axes that are mutually orthogonal to each other. The leading sides and the base sides of arrows illustrated in the drawings are referred to as "+ (positive) " and "- (negative)", respectively. A direction parallel to the X axis is referred to as an "X axis direction", a direction parallel to the Y axis is referred to as a "Y axis direction" , and a direction parallel to the Z axis is referred to as a "Z axis direction".

The X axis is the right and left directions of a head H and a direction oriented from the left eye to the right eye is set to be positive. The Y axis is the upper and lower directions of the head H and a direction oriented from the body to the head H is set to be positive. The Z axis is the front and rear directions of the head H and a direction oriented from the back of the head to the front of the head is set to be positive.

As illustrated in Fig. 1, a head-mounted display (head-mounted image display device) 10 including the image display device 1 according to the embodiment has the same outer appearance as glasses, is mounted on the head H of the observer for use, and causes the observer to view an image formed as a virtual image so that the image overlaps with an outside image.

As illustrated in Figs. 1 and 2, a head-mounted display 10 includes an image display device 1 that includes an image generation unit 3 and a reflection unit 6, and a frame 2 that continues both sides from the front side of the head H.

In the head-mounted display 10, the image generation unit 3 generates video light modulated based on a video signal and the reflection unit 6 guides the generated video light to an eye EY of the observer. Accordingly, a virtual image according to the video signal can be caused to be viewed by the observer.

In the head-mounted display 10, the image generation unit 3 included in image display device 1 is provided on each of the right and left sides of the frame 2 and two reflection units 6 are provided on the front side of the frame 2. The image generation units 3 and the reflection units 6 are arranged to be bilaterally symmetric (bilateral symmetric) using a YZ plane as a reference. The image generation unit 3 and the reflection unit 6 provided on the right side of the frame 2 form a right-eye virtual image on the YZ plane. The image generation unit 3 and the reflection unit 6 provided on the left side of the frame 2 form a left-eye virtual image on the YZ plane.

The configuration of the head-mounted display 10 according to the embodiment is not limited thereto. For example, the image generation unit 3, and the reflection unit 6 may be provided only on the left side of the frame 2 to form only the left-eye virtual image. In contrast, the image generation unit 3 and the reflection unit 6 may be provided only on the right side of the frame 2 to form only the right-eye virtual image. That is, the head-mounted display 10 is not limited to the binocular type head-mounted display 10 as in the embodiment, but a monocular type head-mounted display may be used.

Hereinafter, the units of the head-mounted display 10 will be sequentially described in detail.

The two image generation units 3 and the two reflection units 6 have the same configuration. Therefore, the image generation unit 3 and the reflection unit 6 provided on the left side of the frame 2 will be focused on in the description.

### Frame

As illustrated in Fig. 2, the frame 2 has the same shape as a glasses frame and has a function of holding the image generation unit 3 and the reflection unit 6 included in the image display device 1.

The frame 2 includes a front unit 21 that includes a rim 211 and a shade portion 212 and temples 22 that extend from both of the right and left ends of the front unit 21 to the -Z side.

The shade portion 212 is a member that has a function of suppressing transmission of outside light and holds the reflection unit 6. The shade portion 212 has a concave portion 27 opening toward the side of the observer therein. The reflection unit 6 is provided in the concave portion 27. The shade portion 212 holding the reflection unit 6 is held by the rim 211.

A nose pad 23 is provided in the middle portion of the shade portion 212. The nose pad 23 comes into contact with a nose NS of the observer and supports the head-mounted display 10 with respect to the head H of the observer when the head-mounted display 10 is mounted on the head H of the observer.

The temple 22 is a straight temple with no angle for putting on an ear EA of the observer and a part of the temple 22 is configured to come into contact with the ear EA of the observer when the head-mounted display 10 is mounted on the head H of the observer.

The image generation unit 3 is accommodated and fixed inside the temple 22. Accordingly, the image generation unit 3 is easily integrated with the frame 2, and thus it is possible to achieve miniaturization of the image display device 1 and improve the design of the image display device 1.

The position at which the image generation unit 3 is fixed is not limited to the temple 22, but may be a portion other than the frame 2 or may be a position outside the frame 2.

A material for forming the temple 22 is not particularly limited. For example, any of various resin materials, a composite material in which a carbon fiber, a glass fiber, or the like is mixed in a resin, or a metal material such as aluminum or magnesium can be used.

The shape of the frame 2 is not limited to the shape as long as the frame 2 can be mounted on the head H of the observer.

### Image Display Device

As described above, the image display device 1 includes the image generation unit 3 and the reflection unit 6.

Hereinafter, the units of the image display device 1 according to the embodiment will be described in detail.

### Image Generation unit

As illustrated in Fig. 2, the image generation unit 3 is built in the temple 22 of the frame 2 described above.

As illustrated in Figs. 3 and 4, the image generation unit 3 includes a video light generation unit 31, a driving signal generation unit 32, a control unit 33, a lens 34, and a light scanning unit 36.

The image generation unit 3 has a function of generating a video light modulated based on a video signal and a function of generating a driving signal to drive the light scanning unit 36.

Hereafter, the units of the image generation unit 3 will be described in detail.

### Video Light Generation Unit

The video light generation unit 31 generates video light L1 to be scanned (subjected to light-scanning) by the light scanning unit 36 (light scanner).

The video light generation unit 31 includes a light source unit 311 including a plurality of light sources (light source units) 311R, 311G, and 311B with different wavelengths, a plurality of driving circuits 312R, 312G, and 312B, and a light combination unit (combination unit) 313.

The light source 311R (R light source) included in the light source unit 311 emits red light, the light source 311G (G light source) emits green light, and the light source 311B emits blue light. A full-color image can be displayed using such three pieces of color light.

The light sources 311R, 311G, and 311B are not particularly limited. For example, laser diodes or LEDs can be used.

The light sources 311R, 311G, and 311B are electrically connected to the driving circuits 312R, 312G, and 312B, respectively.

The driving circuit 312R has a function of driving the above-described light source 311R, the driving circuit 312G has a function of driving the above-described light source 311G, and the driving circuit 312B has a function of driving the above-described light source 311B.

The three pieces (three colors) of light (video light) emitted from the light sources 311R, 311G, and 311B driven by the driving circuits 312R, 312G, and 312B are incident on the light combination unit 313.

The light combination unit 313 combines the pieces of light from the plurality of light sources 311R, 311G, and 311B.

In the embodiment, the light combination unit 313 includes two dichroic mirrors 313a and 313b.

The dichroic mirror 313a has a function of transmitting the red light and reflecting the green light. The dichroic mirror 313b has a function of transmitting the red light and the green light and reflecting the blue light.

By using the dichroic mirrors 313a and 313b, the three pieces of light, the red light, the green light, and the blue light from the light sources 311R, 311G, and 311B are combined to form one piece of video light L1.

Here, in the embodiment, the above-described light source unit 311 is disposed so that the light path lengths of the red light, the green light, and the blue light from the light sources 311R, 311G, and 311B are mutually the same.

The light combination unit 313 is not limited to the configuration in which the above-described dichroic mirrors are used. For example, the light combination unit 313 may be configured by a prism, a light-guiding path, an optical fiber, or the like.

In the video light generation unit 31 with the above-described configuration, the three color pieces of video light are generated in the light source unit 311 and the pieces of video light are combined in the light combination unit 313 so that one piece of video light L1 is generated. The video light L1 generated in the video light generation unit 31 is emitted toward the lens 34.

The above-described video light generation unit 31 may include, for example, a light detection unit (not illustrated) that detects the intensity or the like of the video light L1 generated by the light sources 311R, 311G, and 311B. By providing the light detection unit, it is possible to adjust the intensity of the video light L1 according to a detection result.

### Lens

The video light L1 generated by the video light generation unit 31 is incident on the lens 34.

The lens 34 has a function of controlling a radiation angle of the video light L1. The lens 34 is, for example, a collimator lens. The collimator lens is a lens that adjusts (modulates) light to a light flux of a parallel state.

In the lens 34, the video light L1 emitted from the video light generation unit 31 is transmitted in the parallel state to the light scanning unit 36 to be described below.

### Driving Signal Generation Unit

The driving signal generation unit 32 generates a driving signal to drive the light scanning unit 36 (light scanner).

The driving signal generation unit 32 includes a driving circuit 321 that generates a first driving signal used for main scanning (horizontal scanning) in a first direction of the light scanning unit 36 and a driving circuit 322 that generates a second driving signal used for sub-scanning (vertical scanning) in a second direction orthogonal to the first direction of the light scanning unit 36.

For example, the driving circuit 321 generates the first driving signal V1 (horizontal scanning voltage) that periodically varies at a period T1, as illustrated in Fig. 5A. The driving circuit 322 generates the second driving signal V2 (vertical scanning voltage) that periodically varies at a period T2 different from the period T1, as illustrated in Fig. 5B.

The first and second driving signals will be described below in detail along with description of the light scanning unit 36 to be described below.

The driving signal generation unit 32 is electrically connected to the light scanning unit 36 via a signal line (not illustrated). Accordingly, the driving signals (the first and second driving signals) generated by the driving signal generation unit 32 are input to the light scanning unit 36.

### Control Unit

The driving circuits 312R, 312G, and 312B of the video light generation unit 31 and the driving circuits 321 and 322 of the driving signal generation unit 32, as described above, are electrically connected to the control unit 33. The control unit 33 has a function of controlling the driving of the driving circuits 312R, 312G, and 312B of the video light generation unit 31 and the driving circuits 321 and 322 of the driving signal generation unit 32 based on video signals (image signals).

Based on instructions of the control unit 33, the video light generation unit 31 generates the video light L1 modulated according to image information and the driving signal generation unit 32 generates a driving signal according to the image information.

### Light Scanning Unit

The video light L1 emitted from the video light generation unit 31 is incident on the light scanning unit 36 via the lens 34.

The light scanning unit 36 is a light scanner that two-dimensionally scans the video light L1 from the video light generation unit 31. A scanning light (video light) L2 is formed when the light scanning unit 36 scans the video light L1.

As illustrated in Fig. 6, the light scanning unit 36 includes a movable mirror 11, one pair of axis portions 12a and 12b (first axis portion), a frame body 13, two pairs of axis portions 14a, 14b, 14c, and 14d (second axis portion), and a support portion 15, and a permanent magnet 16, and a coil 17. In other words, the light scanning unit 36 has a so-called gimbal structure.

Here, the movable mirror 11 and the one pair of axis portions 12a and 12b configure a first vibration system that sways (reciprocates and rotates) around a Y1 axis (first axis). The movable mirror 11, the one pair of axis portions 12a and 12b, the frame body 13, the two pairs of axis portions 14a, 14b, 14c, and 14d, and the permanent magnet 16 configure a second vibration system that sways (reciprocates and rotates) around an X1 axis (second axis).

The light scanning unit 36 includes a signal superimposition unit 18 (see Fig. 7). The permanent magnet 16, the coil 17, the signal superimposition unit 18, and the driving signal generation unit 32 configure a driving unit that drives the above-described first and second vibration systems (that is, sways the movable mirror 11 around the X1 axis and the Y1 axis).

Hereinafter, the units of the light scanning unit 36 will be sequentially described in detail.

The movable mirror 11 includes a base portion 111 (movable portion) and a light reflection plate 113 fixed to the base portion 111 via a spacer 112.

The light reflection unit 114 having light reflectivity is provided on the upper surface (one surface) of the light reflection plate 113.

In the embodiment, the light reflection plate 113 is formed in a circular shape in a plan view. The shape of the light reflection plate 113 in the plan view is not limited thereto. For example, a circular shape such as an elliptical shape or an oval shape, a tetragonal shape, or a polygonal shape such as a hexagonal shape may be used.

A hard layer 115 is provided on the lower surface (the other surface) of the light reflection plate 113, as illustrated in Fig. 7.

The hard layer 115 is formed of a harder material than a material of the body of the light reflection plate 113. Accordingly, it is possible to improve the rigidity of the light reflection plate 113. Therefore, it is possible to prevent or suppress bending at the time of swaying of the light reflection plate 113. By thinning the thickness of the light reflection plate 113, it is possible to prevent the moment of inertia when the light reflection plate 113 is swayed around the X1 axis and the Y1 axis.

The material of the hard layer 115 is not particularly limited as long as the material is a material harder than the material of the body of the light reflection plate 113. For example, diamond, a carbon nitride film, crystal, sapphire, lithium tantalate, or potassium niobate can be used.

The hard layer 115 may be configured by a single layer or may be a laminate of a plurality of layers. The hard layer 115 is provided as necessary, and thus can be omitted.

The lower surface of the light reflection plate 113 is fixed to the base portion 111 via the spacer 112. Accordingly, it is possible to sway the light reflection plate 113 around the Y1 axis while preventing contact between the light reflection plate 113, and the axis portions 12a and 12b, the frame body 13, the axis portions 14a, 14b, 14c, and 14d.

As illustrated in Fig. 6, the frame body 13 is formed in a frame shape and is provided to surround the base portion 111 of the movable mirror 11 described above. In other words, the base portion 111 of the movable mirror 11 is provided inside the frame body 13 formed in the frame shape.

The frame body 13 is supported by the support portion 15 via the axis portions 14a, 14b, 14c, and 14d. The base portion 111 of the movable mirror 11 is supported by the frame body 13 via the axis portions 12a and 12b.

The axis portions 12a and 12b connect the movable mirror 11 to the frame body 13 so that the movable mirror 11 can be rotated (swayed) around the Y1 axis. The axis portions 14a, 14b, 14c, and 14d connect the frame body 13 to the support portion 15 so that the frame body 13 can be rotated (swayed) around the X1 axis orthogonal to the Y1 axis.

The axis portions 12a and 12b are disposed to face each other via the base portion 111 of the movable mirror 11. The axis portions 12a and 12b form a longitudinal shape extending in the direction along the Y1 axis. One end of each of the axis portions 12a and 12b is connected to the base portion 111 and the other end thereof is connected to the frame body 13. The axis portions 12a and 12b are disposed so that each central axis matches the Y1 axis.

The axis portions 12a and 12b are twisted and deformed with the swaying of the movable mirror 11 around the Y1 axis.

The axis portions 14a and 14b and the axis portions 14c and 14d are disposed to face each other via (interleaving) the frame body 13. The axis portions 14a, 14b, 14c, and 14d form a longitudinal shape extending in the direction along the X1 axis. One end of each of the axis portions 14a, 14b, 14c, and 14d is connected to the frame body 13 and the other end thereof is connected to the support portion 15. The axis portions 14a and 14b are disposed to face each other via the X1 axis. Similarly, the axis portions 14c and 14d are disposed to face each other via the X1 axis.

For the axis portions 14a, 14b, 14c, and 14d, the entire axis portions 14a and 14b and the entire axis portions 14c and 14d are twisted and deformed with the swaying of the frame body 13 around the X1 axis.

In this way, by enabling the movable mirror 11 to be swayed around the Y1 axis and enabling the frame body 13 to be swayed around the X1 axis, it is possible to sway (reciprocate and rotate) the movable mirror 11 around the two axes, the X1 axis and the Y1 axis orthogonal to each other.

Although not illustrated, for example, an angle detection sensor such as a strain sensor is provided in at least one of the axis portions 12a and 12b and at least one of the axis portions 14a, 14b, 14c, and 14d. The angle detection sensor can detect angle information regarding the light scanning unit 36 and, more specifically, each swaying angle of the light reflection unit 114 around the X1 axis and the Y1 axis. The detection result is input to the control unit 33 via a cable (not illustrated).

The permanent magnet 16 is joined to the lower surface (the opposite surface to the light reflection plate 113) of the above-described frame body 13.

In the embodiment, the permanent magnet 16 has a longitudinal shape (rod shape) and is disposed in a direction inclined to the X1 axis and the Y1 axis. The permanent magnet 16 is magnetized in the longitudinal direction. That is, the permanent magnet 16 is magnetized such that one end of the permanent magnet 16 serves as the S pole and the other end thereof serves as the N pole.

In the embodiment, the case in which one permanent magnet is provided in the frame body 13 has been exemplified, but the invention is not limited thereto. For example, two permanent magnets may be provided in the frame body 13. In this case, for example, two permanent magnets formed in a long shape may be provided in the frame body 13 so that the permanent magnets face each other and are parallel to each other via the base portion 111 in a plan view.

The coil 17 is provided immediately below the permanent magnet 16. That is, the coil 17 is provided to face the lower surface of the frame body 13. Accordingly, it is possible to operate a magnetic field generated from the coil 17 to the permanent magnet 16, and it is possible to rotate the movable mirror 11 around each of the two axes (the X1 axis and the Y1 axis) orthogonal to each other.

The coil 17 is electrically connected to the signal superimposition unit 18 (see Fig. 7).

When the signal superimposition unit 18 applies a voltage to the coil 17, a magnetic field with a magnetic flux orthogonal to the X1 axis and the Y1 axis is generated from the coil 17.

The signal superimposition unit 18 includes an adder (not illustrated) that superimposes the first driving signal V1 and the second driving signal V2 described above and applies the superimposed voltage to the coil 17.

The driving circuit 321 generates, for example, the first driving signal V1 (horizontal scanning voltage) that periodically varies at the period T1, as illustrated in Fig. 5A. That is, the driving circuit 321 generates the first driving signal V1 with a first frequency (1/T1).

The first driving signal V1 forms a waveform such as a sinusoidal wave. Therefore, the light scanning unit 36 can efficiently perform main scanning on the light. The waveform of the first driving signal V1 is not limited thereto.

The first frequency (1/T1) is not particularly limited as long as the first frequency is a frequency proper for horizontal scanning and is preferably 10 kHz to 40 kHz.

In the embodiment, the first frequency is set to be the same as a torsional resonant frequency (f1) of the first vibration system (torsional vibration system) configured to include the movable mirror 11 and the one pair of axis portions 12a and 12b. That is, the first vibration system is designed (manufactured) so that the torsional resonant frequency f1 is a frequency proper for the horizontal scanning. Accordingly, a rotational angle of the movable mirror 11 around the Y1 axis can be enlarged.

On the other hand, the driving circuit 322 generates, for example, the second driving signal V2 (vertical scanning voltage) that periodically varies at the period T2 different from the period T1, as illustrated in Fig. 5B. That is, the driving circuit 322 generates the second driving signal V2 with a second frequency (1/T2).

The second driving signal V2 forms a waveform such as a sawtooth wave. Therefore, the light scanning unit 36 can efficiently perform vertical scanning (sub-scanning) on the light. The waveform of the second driving signal V2 is not limited thereto.

In the embodiment, the frequency of the second driving signal V2 is adjusted so that the frequency is a different frequency from a torsional resonant frequency (resonant frequency) of the second vibration system (torsional vibration system) configured to include the movable mirror 11, the one pair of axis portions 12a and 12b, the frame body 13, the two pairs of axis portions 14a, 14b, 14c, and 14d, and the permanent magnet 16.

In a raster scanning scheme which is a video drawing scheme, the above-described vertical scanning is performed while performing the above-described horizontal scanning. At this time, the frequency of the horizontal scanning is set to be higher than the frequency of the vertical scanning. In general, in the raster scanning scheme, scanning at a high frequency is referred to as main scanning and scanning at a low frequency is referred to as sub-scanning.

In the above-described light scanning unit 36, the movable mirror 11 including the light reflection unit 114 is swayed around each of the two axes orthogonal to each other, and thus the light scanning unit 36 can be miniaturized and become lightweight. As a result, the observer can more easily use the image display device 1.

In particular, since the light scanning unit 36 has the gimbal structure, it is possible to miniaturize the configuration (the light scanning unit 36) that scans the video light two-dimensionally.

### Correction Lens

As illustrated in Fig. 3, the video light L2 emitted from the light scanning unit 36 is incident on the correction lens 42.

The correction lens 42 has a function of correcting disturbance of the parallelism of the video light L2 by the reflection unit 6 to be described below. Accordingly, it is possible to improve the resolution performance of the video light L2. Examples of the correction lens 42 include a toroidal lens, a cylindrical lens, and a free curved lens.

Any optical system, for example, a pupil expansion optical system expanding a light flux width (sectional area) of the video light L2, may be provided between the light scanning unit 36 and the correction lens 42, as necessary. By providing such an optical system, the sectional area of the video light incident on the eye EY is expanded. Therefore, it is possible to improve the visibility of the video.

### Reflection Unit

The reflection unit 6 is provided in the shade portion 212 of the front unit 21 and is disposed to be located in front of the left eye EYL of the observer at the time of use. The reflection unit 6 has a sufficient size to cover the eye EY of the observer and has a function of causing the video light L2 from the light scanning unit 36 to be incident toward the eye EY of the observer.

The reflection unit 6 includes a light diffraction unit (the diffraction optical element) 65 and a light transparency member 61.

The light transparency member 61 is a light transparent substrate formed of a resin material with light transparency (light transmissive property) of a high visible range. The light transparency member 61 has a flat plate shape having a surface 611.

The light diffraction unit 65 is provided on the surface 611. The light diffraction unit 65 has a function of deflecting the video light L2 emitted from the light scanning unit 36 in the direction of the eye EY of the observer by diffraction and generating video light L3. That is, the light diffraction unit 65 includes a diffraction optical element that diffracts the video light L2. Since the diffraction optical element is a reflective diffraction element, the video light L2 incident on the light diffraction unit 65 is reflected and the light is mutually intensified at a specific angle decided for each wavelength. Accordingly, the diffracted light with a relatively great intensity at a specific diffraction angle is generated.

That is, the reflection unit 6 is a half mirror and has a function of transmitting outside light (light transparency for the visible light). Accordingly, the reflection unit 6 has a function of reflecting the video light L2 emitted from the light scanning unit 36 and generating the video light L3 and transmitting outside light oriented from the outside of the reflection unit 6 to the eye EY of the observer at the time of use. Accordingly, the observer can view a virtual image (image) formed by the video light L3 while viewing an outside image. That is, the see-through head-mounted display can be realized.

The light transparency member 61 according to the embodiment has the flat plate shape having the surface 611, but may have a curved shape, as necessary. For example, the light transparency member 61 may have a concave surface and the concave surface may be configured to be located on the side of the observer at the time of use. Accordingly, the video light L3 reflected by the reflection unit 6 can be efficiently condensed toward the eye EY of the observer.

The light diffraction unit 65 according to the embodiment includes a hologram element 651 which is one diffraction grating. The hologram element 651 is a semi-transmissive film (volume hologram element) that has properties diffracting light in a specific wavelength region and transmitting light in the other wavelength region in the video light L2 radiated from the light scanning unit 36 to the hologram element 651.

By using the diffraction by the hologram element 651, the video light L2 in the specific wavelength band is guided to the eye EY of the observer. Therefore, a diffraction angle or a light flux state can be easily adjusted, and thus a virtual image can be formed in front of the eye while an outside image is viewed. Specifically, the light diffracted by the hologram element 651 is incident as the video light L3 on the left eye EYL of the observer. The same also applies for the reflection unit 6 located on the side of the right eye EYR. Then, the video light L3 incident on each of the right and left eyes EY of the observer is formed as an image on the retina of the observer.

As the diffraction grating included in the light diffraction unit 65, any diffraction grating may be used as long as the diffraction grating is a reflective diffraction element. Besides the above-described hologram element (holographic grating), a surface release type diffraction grating (blazed grating) in which a groove having a cross section with a sawtooth shape is formed or a surface relief hologram element (blazed holographic grating) in which a hologram element and a surface relief type diffraction grating are combined may be used.

Of these elements, a surface blazed hologram element is preferably used when diffraction efficiency is considered to be important. This element can obtain particularly high diffraction efficiency by matching the wavelength (the wavelength of light with the highest diffraction efficiency) of diffracted light decided by an angle (blazed angle) of a surface forming a groove, the wavelength of diffracted light decided by an interference fringe pitch of a hologram element, and the wavelength of the video light L1.

In the image display device 1 described above, the video light L1 generated by the image generation unit 3 is guided to the eye EY of the observer by the reflection unit 6, so that the observer can recognize the video based on a video signal as a virtual image formed in a visual field range.

### Operation of Image Display Device

Next, an operation of the image display device 1 will be described.

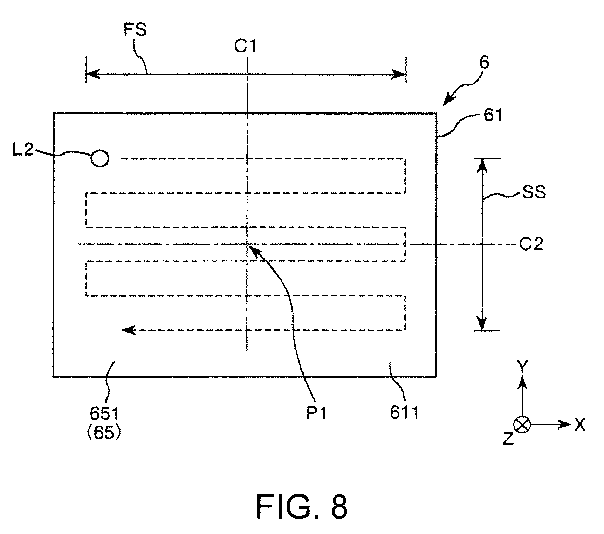

Fig. 8 is a diagram illustrating an example of a form of the video light when the video light scanned by the light scanning unit is projected to a reflection unit and is scanned two-dimensionally.

In the example illustrated in Fig. 8, the video light L2 scanned by the light scanning unit 36 is projected to the rectangular hologram element 651 (the light diffraction unit 65) formed on the light transparency member 61 of the reflection unit 6.

The video light L2 draws any video inside the hologram element 651 by combining the main scanning FS in the horizontal direction (the right and left directions (first direction) of Fig. 8) and the sub-scanning SS in the vertical direction (the upper and lower directions (second direction) of Fig. 8). A scanning pattern of the video light L2 is not particularly limited. In a pattern example indicated by a dotted line arrow in Fig. 8, motions of performing the main scanning in the horizontal direction, subsequently performing the sub-scanning in the vertical direction at an end and performing the main scanning in the opposite direction to the horizontal direction, and subsequently performing the sub-scanning in the vertical direction at an end are repeated.

The direction of the main scanning FS is identical to the horizontal direction, as described above, and is preferably parallel to a direction connecting the center of the left eye EYL to the center of the right eye EYR of the observer. Accordingly, for example, a video surface that has parallel sides parallel to the horizontal and vertical directions can be formed. As a result, it is possible to form a video which can be easily viewed by the observer.

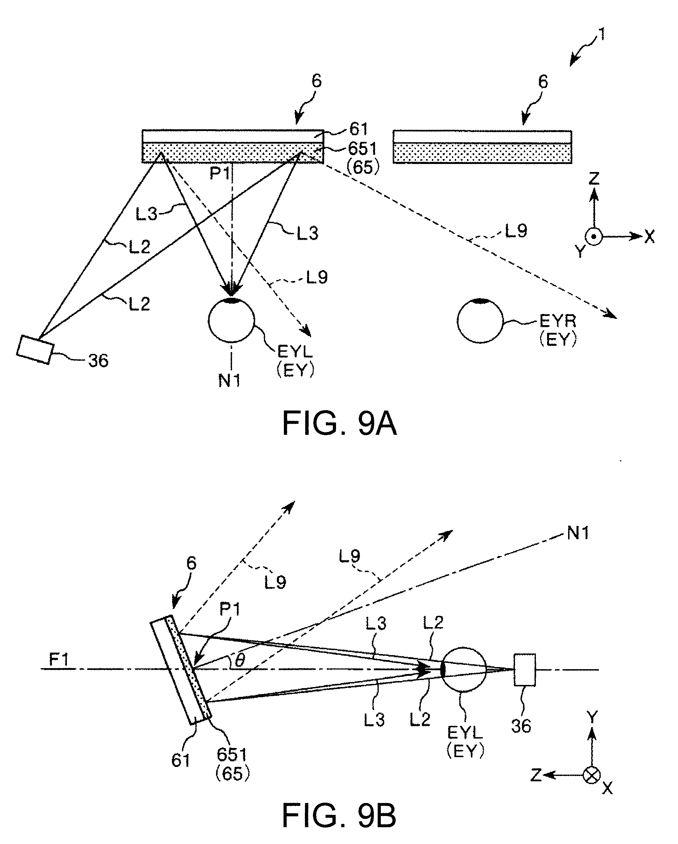

Figs. 9A and 9B are diagrams illustrating an operation of the image display device illustrated in Fig. 3. Fig. 9A is a diagram illustrating a part of the image display device illustrated in Fig. 3 when viewed from the + side of the Y axis. Fig. 9B is a diagram illustrating a part of the image display device illustrated in Fig. 3 when viewed from the - side of the X axis.

Two solid-line arrows illustrated in Fig. 9A correspond to the video light L2 corresponding to both ends of the amplitude of the main scanning FS and the video light L3 generated by diffracting the video light L2 in the light diffraction unit 65.

Two solid-line arrows illustrated in Fig. 9B correspond to the video light L2 corresponding to both ends of the amplitude of the sub scanning SS and the video light L3 generated by diffracting the video light L2 in the light diffraction unit 65.

An intersection point P1 illustrated in Fig. 9B is an intersection point between a center C1 of the amplitude of the main scanning FS illustrated in Fig. 8 and a center C2 of the amplitude of the sub-scanning SS.

A normal line N1 illustrated in Fig. 9B is a normal line at the intersection point P1 on the surface of the light diffraction unit (diffraction optical element) 65. The "normal line N1" in the invention is assumed to be a half-straight line having the intersection point P1 as one end and extending toward a space adjacent to the surface of the light diffraction unit 65.

A plane F1 illustrated in Fig. 9B is a virtual plane that has the intersection point P1, the center of the right eye EYR of the observer, and the center of the left eye EYL of the observer.

As illustrated in Figs. 9A and 9B, the light scanning unit 36 illustrated in Figs. 9A and 9B is located inside the plane F1 and on the left side (lateral side) of the left eye EYL. The video light L2 scanned while reflected in the light scanning unit 36 is diffracted in the light diffraction unit 65 and is incident as the video light L3 on the left eye EYL. Accordingly, the observer can view the video based on the video signal.

Incidentally, the light diffraction unit 65 illustrated in Figs. 9A and 9B are inclined with respect to the plane F1 so that the normal line N1 of the surface of the light diffraction unit 65 is located closer to the head top side of the observer than the plane F1. That is, when viewed from the - side of the X axis, the surface of the light diffraction unit 65 is slightly inclined toward the head top side of the observer (the + side of the Y axis) from the state in which the light diffraction unit 65 confronts the left eye EYL, as illustrated in Fig. 9B.

The light scanning unit 36 emitting the video light L2 is provided at a position including the plane F1.

By inclining the normal line N1 with respect to the plane F1, a probability of the incidence of reflected light L9 on the right eye EYR can be sufficiently lowered even when all of the video light L2 is not diffracted in the light diffraction unit 65 and part of the video light L2 is reflected (regularly reflected) from the surface of the light diffraction unit 65. That is, when the part of the video light L2 is incident on the surface of the light diffraction unit 65, the reflected light is emitted at the same reflection angle as an incident angle. Therefore, when the normal line N1 is inclined with respect to the plane F1, the reflected light L9 is emitted in a direction distant from the plane F1 to the head top side. As a result, the incidence of the reflected light L9 on the right eye EYR located on the plane F1 is suppressed. Accordingly, the unintentional light is rarely incident on the right eye EYR, and thus it is possible to prevent visibility of an image or an outside scenery to be viewed by the right eye EYR from deteriorating.

In Fig. 9B, the reflected light L9 is emitted closer to the head top side of the observer than the plane F1. Therefore, a probability of the incidence of the reflected light L9 on the eyes of another person is lowered, and thus it is possible to reduce a concern of the other person feeling uncomfortable.

An inclination angle θ of the normal line N1 with respect to the plane F1 may be set to an angle at which the reflected light L9 at the time of the reflection of the video light L2 located on the most + side of the Y axis is not incident on the right eye EYR. Accordingly, the inclination angle θ can be decided according to the size of the pupil of the right eye EYR, a distance between the right eye EYR and the reflection unit 6, the amplitude of the sub-scanning SS, and the like.

For example, the inclination angle θ is preferably equal to or greater than 0.1° and equal to or less than 30° and is more preferably equal to or greater than 0.2° and equal to or less than 20°. Accordingly, it is possible to sufficiently reduce the probability of the incidence of the reflected light L9 on the right eye EYR while suppressing discomfort of an appearance.

On the other hand, in Fig. 9A, the normal line N1 of the surface of the light diffraction unit 65 overlaps with the center of the left eye EYL when viewed from the head top side of the observer. Therefore, the light diffraction unit 65 or the reflection unit 6 supporting the light diffraction unit 65 is not inclined in the right and left directions of the head H. Therefore, the reflection unit 6 illustrated in Figs. 9A and 9B is viewed as, for example, the same appearance of a glasses lens, goggles, or the like when viewed from a third person, and thus the discomfort of the appearance is small.

In the invention, the normal line N1 may not necessarily overlap with the center of the left eye EYL when viewed from the head top side of the observer, but may be deviated to the left side or the right side from the center of the left eye EYL.

When a light amount of a general video is integrated, the integrated light amount of the video light L2 at the intersection point P1 is considered to be the largest in many cases. Therefore, from the viewpoint of suppressing the deterioration in the visibility on the right eye EYR, the reflected light L9 at the time of the reflection of the video light L2 at least at the intersection point P1 may not be incident on the right eye EYR in some situations. From this viewpoint, the inclination angle θ of the normal line N1 with respect to the plane F1 can be alleviated to the further lower limit than an angle satisfying a condition that the reflected light L9 at the time of the reflection of the video light L2 located on the most + side of the Y axis is not incident on the right eye EYR.

That is, to cause excessive stray light not to be incident on the right eye EYR, it is sufficient that the reflected light L9 reflected at least at the intersection point P1 is set at an angle at which the reflected light L9 is not incident on the right eye EYR. The lower limit of the inclination angle θ satisfying such a condition is considered to be, for example, 0.01°.

Even when the surface 611 is a curved surface, as described above, the embodiment can be applied. That is, when the normal line N1 at the intersection point P1 of the surface 611 configured as a curved surface is inclined with respect to the plane F1, the above-described advantages can be obtained.

### Second Embodiment

Next, a second embodiment of the image display device according to the invention will be described.

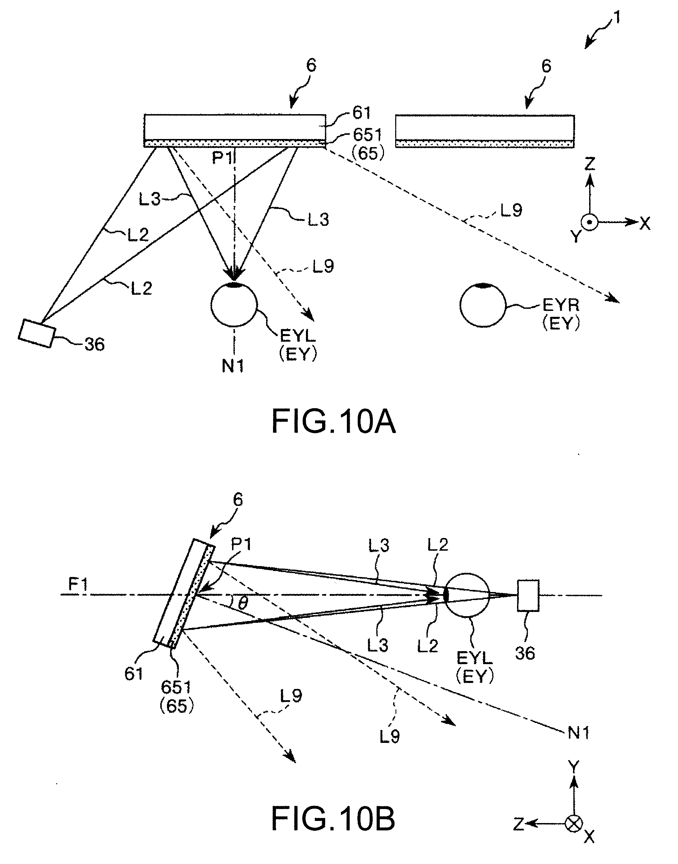

Figs. 10A and 10B are diagrams illustrating an operation of the image display device according to the second embodiment. Fig. 10A is a diagram illustrating a part of the image display device according to the second embodiment when viewed from the + side of the Y axis. Fig. 10B is a diagram illustrating a part of the image display device illustrated in Fig. 10A when viewed from the - side of the X axis.

Hereinafter, the second embodiment will be described. In the following description, differences from the above-described first embodiment will be focused on in the description and the same portions will not be described. In the drawings, the same reference numerals are given to the same portions as the above-described embodiment.

The image display device 1 according to the second embodiment is the same as the image display device 1 according to the first embodiment except that the normal line N1 of the surface of the light diffraction unit 65 is inclined with respect to the plane F1 to be located closer to the body of the observer than the plane F1. That is, when viewed from the - side of the X axis, the surface of the light diffraction unit 65 is slightly inclined toward the body side (the - side of the Y axis) of the observer from the state in which the light diffraction unit 65 confronts the left eye EYL, as illustrated in Fig. 10B.

Even in the embodiment, the light scanning unit 36 emitting the video light L2 is provided at a position including the plane F1.

By inclining the normal line N1 with respect to the plane F1, the same advantages as the first embodiment can be obtained. That is, a probability of the incidence of reflected light L9 on the right eye EYR can be sufficiently lowered even when all of the video light L2 is not diffracted in the light diffraction unit 65 and part of the video light L2 is reflected from the surface of the light diffraction unit 65. That is, the reflected light L9 is emitted in a direction distant from the plane F1 to the body side of the observer and unintentional light is rarely incident on the right eye EYR. Thus, it is possible to prevent visibility of an image or an outside scenery to be viewed by the right eye EYR from deteriorating.

In Fig. 10B, since the normal line N1 is inclined closer to the body side of the observer than the plane F1, outside light is rarely entered between the reflection unit 6 and the left eye EYL from the head top side of the observer. Therefore, it is possible to suppress deterioration in the visibility of an image on the left eye EYL or the right eye EYR or an outside scenery from deteriorating due to outside light.

An inclination angle θ of the normal line N1 with respect to the plane F1 may be set to an angle at which the reflected light L9 at the time of the reflection of the video light L2 located on the most - side of the Y axis is not incident on the right eye EYR. Accordingly, the inclination angle θ can be decided according to the size of the pupil of the right eye EYR, a distance between the right eye EYR and the reflection unit 6, the amplitude of the sub-scanning SS, and the like.

For example, the inclination angle θ is preferably equal to or greater than 0.01° and equal to or less than 30° and is more preferably equal to or greater than 0.1° and equal to or less than 20°. Accordingly, it is possible to sufficiently reduce the probability of the incidence of the reflected light L9 on the right eye EYR while suppressing discomfort of an appearance.

On the other hand, in Fig. 10A, the normal line N1 of the surface of the light diffraction unit 65 overlaps with the center of the left eye EYL when viewed from the head top side of the observer. Therefore, the light diffraction unit 65 or the reflection unit 6 supporting the light diffraction unit 65 is not inclined in the right and left directions of the head H. Therefore, the reflection unit 6 illustrated in Figs. 9A and 9B is viewed as, for example, the same appearance of a glasses lens, goggles, or the like when viewed from a third person, and thus the discomfort of the appearance is small.

In the invention, the normal line N1 may not necessarily overlap with the center of the left eye EYL when viewed from the head top side of the observer, but may be deviated to the left side or the right side from the center of the left eye EYL.

When the normal line N1 at the intersection point P1 is inclined with respect to the plane F1, as described above, despite the fact that the surface 611 is a curved surface, the above-described advantages can be obtained.

In the foregoing second embodiment, the same operations and advantages as the first embodiment can be obtained.

### Third Embodiment

Next, a third embodiment of the image display device according to the invention will be described.

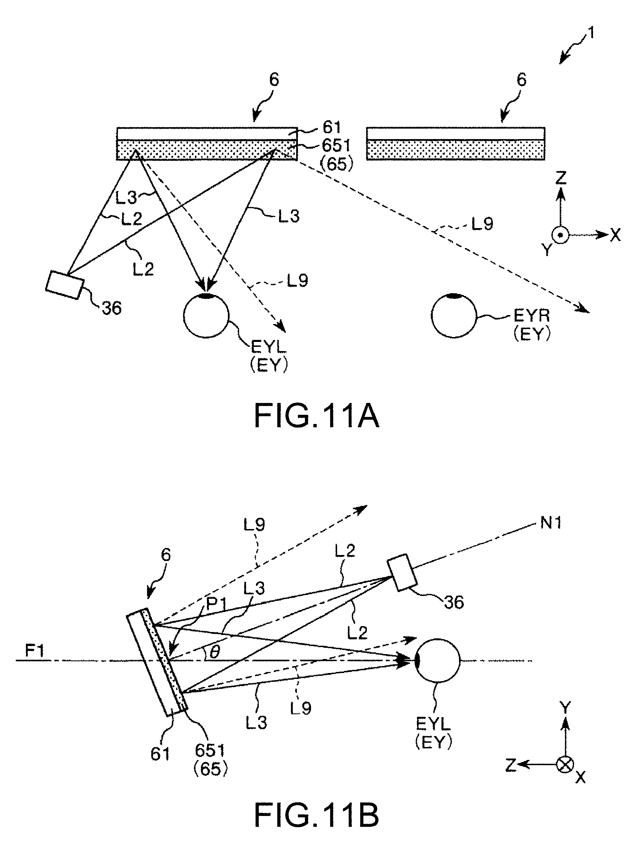

Figs. 11A and 11B are diagrams illustrating an operation of the image display device according to the third embodiment. Fig. 11A is a diagram illustrating a part of the image display device according to the third embodiment when viewed from the + side of the Y axis. Fig. 11B is a diagram illustrating a part of the image display device illustrated in Fig. 11A when viewed from the - side of the X axis.

Hereinafter, the third embodiment will be described. In the following description, differences from the above-described first and second embodiments will be focused on in the description and the same portions will not be described. In the drawings, the same reference numerals are given to the same portions as the above-described embodiment.

In the image display device 1 according to the third embodiment, as in the image display device 1 according to the first embodiment, the normal line N1 of the surface of the light diffraction unit 65 is inclined with respect to the plane F1 so that the normal line N1 is located closer to the head top side of the observer than the plane F1. Therefore, in the embodiment, the same operations and advantages as the first embodiment can be obtained.

In addition to this, in the embodiment, the light scanning unit 36 is located on the left slope of the left eye EYL on the head top side, as illustrated in Figs. 11A and 11B. That is, in the embodiment, the light scanning unit 36 is located on the left side of the left eye EYL and closer to the head top side of the observer than the plane F1, as in the first embodiment.

In other words, a surface on which a beam of the light subjected to the main scanning to pass the center of the sub-scanning SS in Fig. 8 is swept, that is, a region (main scanning surface) interposed between two pieces of video light L2 in Fig. 11A, is located closer to the head top side (the same side as the normal line N1) than the plane F1 and is inclined with respect to the plane F1.

When such a positional relation is established, the surface of the light diffraction unit 65 according to the embodiment is in a state (a state close to further direct confronting to the light reflection plate 113 in a non-driven state) close to further direct confronting to the light scanning unit 36 than in the first embodiment. Therefore, an amount of correction added to a video signal or a driving signal can be reduced to correct a scanning region necessary when the light scanning unit 36 scans the video light L2, for example, correct (correct so-called trapezoidal distortion) trapezoidal distortion of the video light L2 scanned on the surface of the light diffraction unit 65. As a result, it is possible to suppress deterioration in image quality caused in the correction to be smaller.

To obtain the foregoing advantages, the above-described main scanning surface may be inclined to be located closer to the head top side of the observer than the plane F1. As illustrated in Figs. 11A and 11B, preferably, the above-described main scanning surface is inclined to include the normal line N1 of the surface of the light diffraction unit 65.

In other words, the posture of the reflection unit 6 and the disposition of the light scanning unit 36 are set so that the light scanning unit 36 is located on the normal line N1.

When such a positional relation is established, the amplitude of the sub-scanning SS is symmetric across the main scanning surface. Therefore, so-called trapezoidal distortion can be suppressed to be the minimum. As a result, the amount of correction added to the video signal or the driving signal can be minimized.

### Fourth Embodiment

Next, a fourth embodiment of the image display device according to the invention will be described.

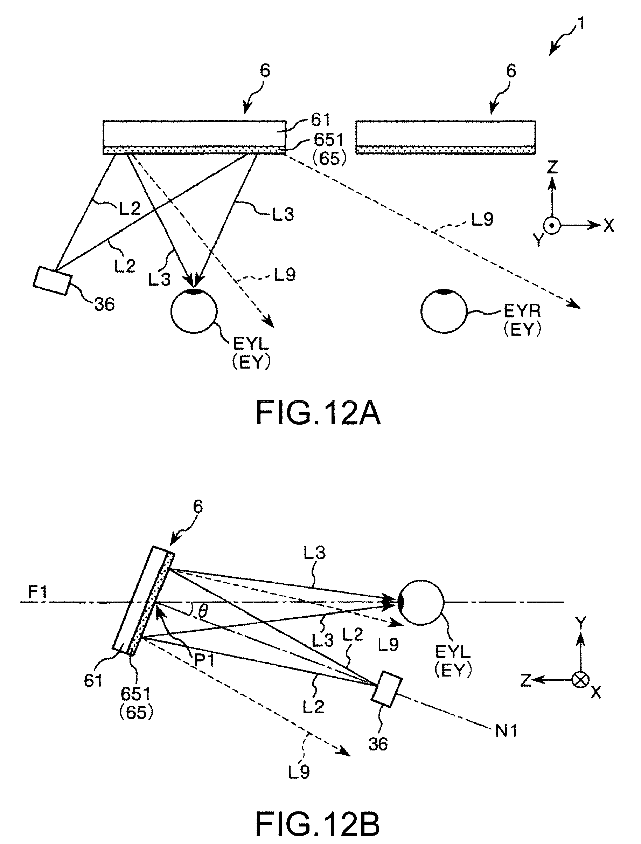

Figs. 12A and 12B are schematic diagrams illustrating an operation of the image display device according to the fourth embodiment. Fig. 12A is a diagram illustrating a part of the image display device according to the fourth embodiment when viewed from the + side of the Y axis. Fig. 12B is a diagram illustrating a part of the image display device illustrated in Fig. 12A when viewed from the - side of the X axis.

Hereinafter, the fourth embodiment will be described. In the following description, differences from the above-described first to third embodiments will be focused on in the description and the same portions will not be described. In the drawings, the same reference numerals are given to the same portions as the above-described embodiment.

In the image display device 1 according to the fourth embodiment, as in the image display device 1 according to the second embodiment, the normal line N1 of the surface of the light diffraction unit 65 is inclined with respect to the plane F1 so that the normal line N1 is located closer to the body side of the observer than the plane F1. Therefore, in the embodiment, the same operations and advantages as the second embodiment can be obtained.

In addition to this, in the embodiment, the light scanning unit 36 is located on the left slope of the left eye EYL on the body side, as illustrated in Figs. 12A and 12B. That is, in the embodiment, the light scanning unit 36 is located on the left side of the left eye EYL and closer to the body side of the observer than the plane F1, as in the second embodiment.

In other words, a surface on which a beam of the light subjected to the main scanning to pass the center of the sub-scanning SS in Fig. 8 is swept, that is, a region (main scanning surface) interposed between two pieces of video light L2 in Fig. 12A, is located closer to the body side (the same side as the normal line N1) than the plane F1 and is inclined with respect to the plane F1.

When such a positional relation is established, the surface of the light diffraction unit 65 according to the embodiment is in a state (a state close to further direct confronting to the light reflection plate 113 in a non-driven state) close to further direct confronting to the light scanning unit 36 than in the second embodiment. Therefore, an amount of correction added to a video signal or a driving signal can be reduced to correct a scanning region necessary when the light scanning unit 36 scans the video light L2, for example, correct (correct so-called trapezoidal distortion) trapezoidal distortion of the video light L2 scanned on the surface of the light diffraction unit 65. As a result, it is possible to suppress deterioration in image quality caused in the correction to be smaller.

To obtain the foregoing advantages, the above-described main scanning surface may be inclined to be located closer to the body side of the observer than the plane F1. As illustrated in Figs. 12A and 12B, preferably, the above-described main scanning surface is inclined to include the normal line N1 of the surface of the light diffraction unit 65.

In other words, the posture of the reflection unit 6 and the disposition of the light scanning unit 36 are set so that the light scanning unit 36 is located on the normal line N1.

When such a positional relation is established, the amplitude of the sub-scanning SS is symmetric across the main scanning surface. Therefore, so-called trapezoidal distortion can be suppressed to be the minimum. As a result, the amount of correction added to the video signal or the driving signal can be minimized.

### Supplement 1

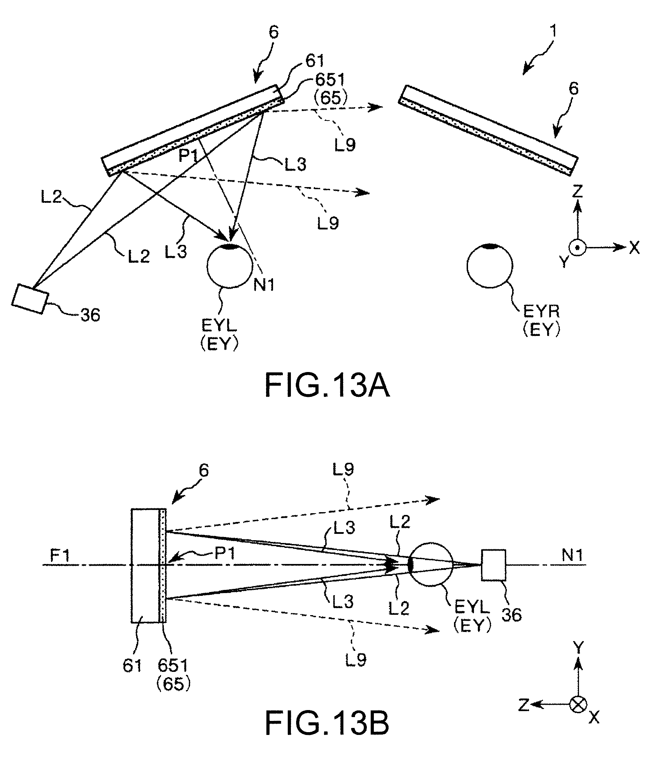

Figs. 13A and 13B are diagrams illustrating an operation of the image display device according to Supplement 1. Fig. 13A is a diagram illustrating a part of the image display device according to Supplement 1 when viewed from the + side of the Y axis. Fig. 13B is a diagram illustrating a part of the image display device illustrated in Fig. 13A when viewed from the - side of the X axis.

Hereinafter, an image display device according to Supplement 1 will be described. In the following description, differences from the image display device according to the above-described first to fourth embodiments will be focused on in the description and the same portions will not be described. In the drawings, the same reference numerals are given to the same portions of the image display device according to the above-described embodiment.

In an image display device 1 according to Supplement 1, the normal line N1 of the surface of the light diffraction unit 65 is included in the plane F1.

On the other hand, in the image display device 1 according to Supplement 1, the reflection unit 6 is inclined so that the normal line N1 is directed between the left eye EYL and the right eye EYR. That is, when viewed from the + side of the Y axis, the surface of the light diffraction unit 65 is slightly inclined toward the side of the right eye EYR (the + side of the X axis) from the state in which the light diffraction unit 65 confronts the left eye EYL, as illustrated in Fig. 13A.

By inclining the surface of the light diffraction unit 65 in this way, a probability of the incidence of reflected light L9 on the right eye EYR can be sufficiently lowered even when all of the video light L2 is not diffracted in the light diffraction unit 65 and part of the video light L2 is reflected from the surface of the light diffraction unit 65. Accordingly, the unintentional light is rarely incident on the right eye EYR, and thus it is possible to prevent visibility of an image or an outside scenery to be viewed by the right eye EYR from deteriorating.

Here, when α is an angle formed by the Z axis and the normal line N1, the inclination angle α is appropriately decided according to the size of the pupil of the right eye EYR, a distance between the right eye EYR and the reflection unit 6, the amplitude of the sub-scanning SS, and the like.

For example, the inclination angle θ is preferably equal to or greater than 0.01° and equal to or less than 30° and is more preferably equal to or greater than 0. 02° and equal to or less than 20°. Accordingly, it is possible to sufficiently reduce the probability of the incidence of the reflected light L9 on the right eye EYR while suppressing discomfort of an appearance.

Except for these points, the image display device 1 according to Supplement 1 is the same as the image display device 1 according to the first to fourth embodiments.

### Supplement 2

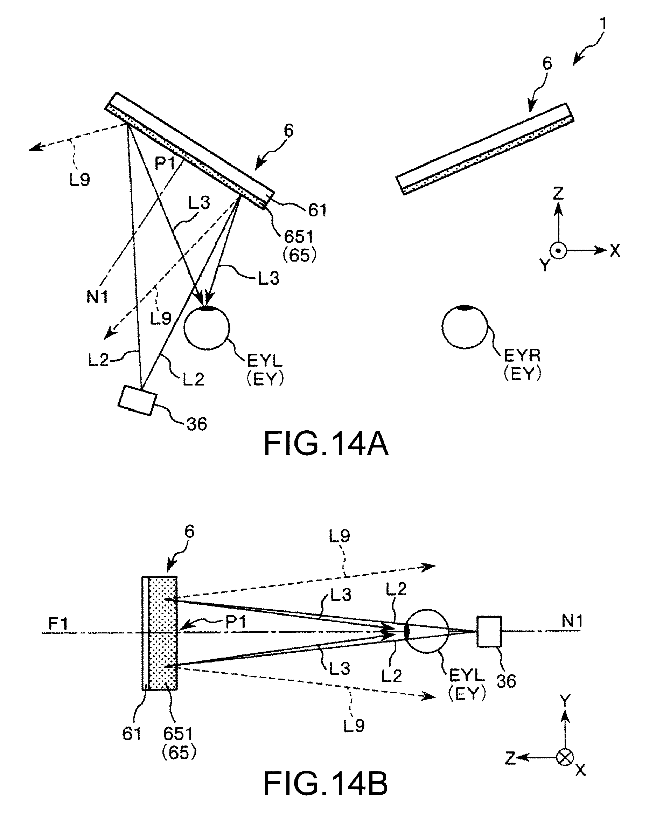

Figs. 14A and 14B are schematic diagrams illustrating an operation of the image display device according to Supplement 2. Fig. 14A is a diagram illustrating a part of the image display device according to Supplement 2 when viewed from the + side of the Y axis. Fig. 14B is a diagram illustrating a part of the image display device illustrated in Fig. 14A when viewed from the - side of the X axis.

Hereinafter, an image display device according to Supplement 2 will be described. In the following description, differences from the image display device according to the above-described first to fourth embodiments will be focused on in the description and the same portions will not be described. In the drawings, the same reference numerals are given to the same portions of the image display device according to the above-described embodiment.

In an image display device 1 according to Supplement 2, the normal line N1 of the surface of the light diffraction unit 65 is included in the plane F1.

On the other hand, in the image display device 1 according to Supplement 2, the reflection unit 6 is inclined so that the normal line N1 is directed to the left side of the left eye EYL. That is, when viewed from the + side of the Y axis, the surface of the light diffraction unit 65 is slightly inclined to the left side (the - side of the X axis) from the state in which the light diffraction unit 65 confronts the left eye EYL, as illustrated in Fig. 14A.

By inclining the surface of the light diffraction unit 65 in this way, a probability of the incidence of reflected light L9 on the right eye EYR can be sufficiently lowered even when all of the video light L2 is not diffracted in the light diffraction unit 65 and part of the video light L2 is reflected from the surface of the light diffraction unit 65. Accordingly, the unintentional light is rarely incident on the right eye EYR, and thus it is possible to prevent visibility of an image or an outside scenery to be viewed by the right eye EYR from deteriorating.

Here, when α is an angle formed by the Z axis and the normal line N1, the inclination angle α is appropriately decided according to the size of the pupil of the right eye EYR, a distance between the right eye EYR and the reflection unit 6, the amplitude of the sub-scanning SS, and the like.

For example, the inclination angle θ is preferably equal to or greater than 0.01° and equal to or less than 30° and is more preferably equal to or greater than 0.02° and equal to or less than 20°. Accordingly, it is possible to sufficiently reduce the probability of the incidence of the reflected light L9 on the right eye EYR while suppressing discomfort of an appearance.

Except for these points, the image display device 1 according to Supplement 2 is the same as the image display device 1 according to the first to fourth embodiments.

### Fifth Embodiment

Next, a fifth embodiment of the image display device according to the invention will be described.

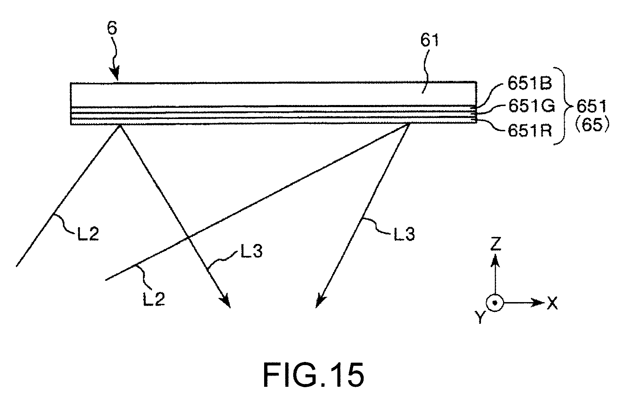

Fig. 15 is a diagram schematically illustrating a configuration of the fifth embodiment of the image display device according to the invention.

Hereinafter, the fifth embodiment will be described. In the following description, differences from the above-described first to fourth embodiments will be mainly described and the description of the same portions will be omitted. In the drawings, the same reference numerals are given to the same portions as those of the above-described embodiment.

An image display device 1 according to the fifth embodiment is the same as the image display device 1 according to the first embodiment except that the configurations of the hologram element 651 is different.

That is, in the hologram element 651 according to the above-described embodiments, interference fringes for red light, interference fringes for green light, and interference fringes for blue light are superimposed (multiplexed) to be formed at different pitches in a one-layered hologram layer so that three pieces of color light, the red light, the green light, and the blue light, are individually diffracted.

However, as illustrated in Fig. 15, the hologram element 651 according to the embodiment is configured as a laminate in which a hologram layer 651R diffracting the red light, a hologram layer 651G diffracting the green light, and a hologram layer 651B diffracting the blue light are stacked.

In the embodiment, since the interference fringes for the red light, the interference fringes for the green light, and the interference fringes for the blue light are formed in the mutually different hologram layers in this way, deterioration of the diffraction efficiency caused due to the superimposition of the interference fringes is suppressed. Therefore, in the embodiment, it is possible to improve the diffraction efficiency of the hologram element 651.

By improving the diffraction efficiency of the hologram element 651, it is possible to relatively reduce the amount of light reflected from the hologram element 651. Therefore, even when the video light L2 is reflected from the surface of the light diffraction unit 65 and the amount of light is suppressed and incident on the right eye EYR, the deterioration in the visibility of an image or an outside scenery to be viewed by the right eye EYR can be minimized.

The stack order of the hologram layers 651R, 651G, and 651B is not limited to the stack order illustrated in Fig. 15.

In the foregoing fifth embodiment, it is also possible to obtain the same operations and advantages as the first to fourth embodiments.

The image display device according to the invention has been described above based on the illustrated embodiments, but the invention is not limited thereto.

For example, in the image display device according to the invention, the configuration of each unit can be substituted with any configuration having the same function and any configuration can also be added.

## Claims

1. An image display device to be mounted on a head of an observer for use, the device comprising:
a video light generation unit that is arranged to generate video light modulated based on a video signal;
a light scanner that is to be located on a lateral side of the head of the observer, is arranged to perform main scanning on the video light in a first direction, and is arranged to perform sub-scanning on the video light in a second direction orthogonal to the first direction; and
a diffraction optical element on which the video light scanned by the light scanner is to be incident and which is arranged to diffract the incident video light and is arranged to emit the video light toward one eye of the observer,
wherein for the video light at an intersection point between a center of an amplitude of the main scanning and a center of an amplitude of the sub-scanning, a normal line at the intersection point to the surface of the diffraction optical element is inclined with respect to a virtual plane including a center of the one eye of the observer, a center of the other eye of the observer, and the intersection point so that light reflected from a surface of the diffraction optical element is not incident on the other eye of the observer.

2. The image display device according to claim 1,
wherein a scanning region of the light subjected to the main scanning passes the center of the amplitude of the sub-scanning and is inclined to the same side of the normal line with respect to the virtual plane.

3. The image display device according to claim 1 or 2,
wherein the normal line at the intersection point of the surface of the diffraction optical element is inclined with respect to the virtual plane so that the normal line is located closer to a head top side of the observer than the virtual plane.

4. The image display device according to claim 1 or 2,
wherein the normal line at the intersection point of the surface of the diffraction optical element is inclined with respect to the virtual plane so that the normal line is located closer to a body side of the observer than the virtual plane.

5. The image display device according to one of the preceding claims,
wherein the first direction is parallel to a direction connecting the center of the one eye of the observer to the center of the other eye of the observer.

6. The image display device according to one of the preceding claims,
wherein the diffraction optical element is a volume hologram element.

7. The image display device according to one of the preceding claims, further comprising:
a frame that is arranged to be located on the lateral side of the head of the observer,
wherein the light scanner is fixed to the frame.

8. A method of operating the image display device according to one of the preceding claims, with the image display device being mounted on the head of the observer.
